# EUROPEAN PATENT APPLICATION

(11) **EP 4 836 150 A1**
(43) Date of publication of application: **04.11.2026**
(21) Application number: 26164278.9
(22) Date of filing: 12.03.2026
(51) Int. Cl.: H01M 50/293, H01M 10/613, H01M 10/647, H01M 10/6555, H01M 50/291

(54) **BATTERY MODULE**

(30) Priority: 09.04.2025 KR 20250046186
(71) Applicant: SAMSUNG SDI CO., LTD., Yongin-si, Gyeonggi-do 17084 (KR)
(72) Inventor: KIM, Minsu, Yongin-si, Gyeonggi-do 17084 (KR); LEE, Kijai, Yongin-si, Gyeonggi-do 17084 (KR)
(74) Representative: Gulde & Partner

(57) **Abstract**

A battery module includes a plurality of battery cells; insulation sheets positioned between the plurality of battery cells; and a cooling plate positioned on one side of the plurality of battery cells, wherein each of the insulation sheets includes: a pin-shaped flame retardant sheet including a center portion positioned at the center of the insulation sheet and an extension portion extending in a direction intersecting with a height direction of the center portion from the center portion; a pair of first thermal insulation sheets respectively positioned on opposite sides of the center portion of the flame retardant sheet; and a pair of second thermal insulation sheets respectively positioned on outer sides of the pair of first thermal insulation sheets.

## Description

### BACKGROUND

### 1. Field

The present disclosure relates to a battery module.

### 2. Description of the Related Art

Secondary batteries, unlike primary batteries that cannot be recharged, are batteries which can be repeatedly charged and discharged. Low-capacity secondary batteries are used in small portable electronic devices such as smartphones, feature phones, laptop computers, digital cameras, and camcorders, and high-capacity secondary batteries are widely used as power sources for driving motors in hybrid cars, electric cars, and as batteries for power storage. These secondary batteries include an electrode assembly including a positive electrode and a negative electrode, a case accommodating the electrode assembly, and an electrode terminal connected to the electrode assembly.

The information disclosed in the background is only for enhancing understanding of the background of the present disclosure, and therefore may include information that does not constitute prior art.

### SUMMARY

An objective of the present disclosure is to provide a battery module capable of delaying or preventing heat propagation and thermal runaway between battery cells.

An objective of the present disclosure is to provide a battery module with improved stability.

However, the technical problem that the present disclosure seeks to solve is not limited to the problem described above, and other problems not mentioned may be clearly understood by a person skilled in the art from the specification described below.

A battery module according to the independent claims is provided. According to an aspect of the present disclosure, a battery module includes: battery cells; insulation sheets between adjacent battery cells of the battery cells; and a cooling plate positioned on one side of the battery cells. Each of the insulation sheets includes: a pin-shaped flame-retardant sheet including a center portion positioned substantially at the center of the insulation sheet and an extension portion extending from the center portion in a direction intersecting with a height direction of the center portion; a pair of first thermal insulation sheets respectively positioned on opposite sides of the center portion of the flame retardant sheet; and a pair of second thermal insulation sheets respectively positioned on outer sides of the pair of first thermal insulation sheets.

According to an embodiment, the pair of first thermal insulation sheets may include aerogel.

According to an embodiment, the pair of second thermal insulation sheets may include MICA.

According to an embodiment, the extension portion may substantially cover tops or bottoms of the pair of first thermal insulation sheets and the pair of second thermal insulation sheets.

According to an embodiment, the flame-retardant sheet may include at least one of a flame retardant material or a heat dissipation material.

According to an embodiment, the flame-retardant sheet may include a first sheet positioned in the center and including the flame retardant material, and a second sheet positioned on opposite sides of the first sheet and including the heat dissipation material.

According to an embodiment, the second sheet may include the extension portion of the flame retardant sheet.

According to an embodiment, the flame retardant material may include at least one of chlorine, bromine, and/or antimony.

According to an embodiment, the heat dissipation material may include at least one of a metal material, a carbon-based material, a boron nitride nanotube, and/or a silicon composite material.

According to an embodiment, the extension portion may be positioned on a side of the flame-retardant sheet opposite to the cooling plate.

According to another aspect, a battery module includes: battery cells; insulation sheets positioned between adjacent battery cells of the battery cells; and a cooling plate positioned on one side of the battery cells. Each of the insulation sheets includes: a pin-shaped flame-retardant sheet including a center portion positioned at substantially the center of the insulation sheet; a pair of first thermal insulation sheets positioned on opposite sides of the center portion of the flame retardant sheet; and a pair of second thermal insulation sheets respectively positioned on outer sides of the pair of first thermal insulation sheets. The flame retardant sheet substantially covers tops or bottoms of the pair of first thermal insulation sheets and the pair of second thermal insulation sheets.

According to an embodiment, the pair of first thermal insulation sheets may include aerogel.

According to an embodiment, the pair of second thermal insulation sheets may include MICA.

According to an embodiment, the flame-retardant sheet may include a center portion positioned at the center of the insulation sheet and an extension portion extending in a direction intersecting with a height direction of the center portion from the center portion, and the extension portion may substantially cover the top of the pair of first thermal insulation sheets and the pair of second thermal insulation sheets.

According to an embodiment, the flame retardant sheet may include a center portion positioned substantially at the center of the insulation sheet and an extension portion extending from the center portion in a direction intersecting with a height direction of the center portion, and the extension portion may substantially cover the bottom of the pair of first thermal insulation sheets and the pair of second thermal insulation sheets.

According to an embodiment, the flame-retardant sheet may include at least one of a flame retardant material or a heat dissipation material.

According to an embodiment, the flame-retardant sheet may include a first sheet positioned substantially in the center and including the flame retardant material, and a second sheet positioned on opposite sides of the first sheet and including the heat dissipation material, and the second sheet may include the extension portion.

According to an embodiment, the flame-retardant material may include at least one of chlorine, bromine, and/or antimony.

According to an embodiment, the heat dissipation material may include at least one of a metal material, a carbon-based material, a boron nitride nanotube, and/or a silicon composite material.

According to an embodiment, the extension portion may be positioned on a side of the flame-retardant sheet opposite to the cooling plate.

### BRIEF DESCRIPTION OF THE DRAWINGS

The following drawings of this description illustrate preferred embodiments of the present disclosure, and, together with disclosure of invention described below, serve to further understand a technical idea of the present disclosure, so that the present disclosure should not be interpreted as being limited to matters described in such drawings.

The above and other aspects, features, and advantages of certain embodiments of the disclosure will be more apparent from the following description taken in conjunction with the accompanying drawings in which:
FIG. 1 is a perspective view schematically illustrating a battery module according to an embodiment of the present disclosure;
FIG. 2 is an exploded perspective view schematically illustrating a battery module according to an embodiment of the present disclosure;
FIG. 3 is a perspective view schematically illustrating an example of a battery cell of the battery module of FIGS. 1 and 2;
FIG. 4 is a cross-sectional view schematically illustrating an example of a cross-section taken along line III-III' of FIG. 3;
FIG. 5 is a perspective view schematically illustrating an example of an insulation sheet and a pin-shaped flame retardant sheet including an extension portion of a battery module according to an embodiment of the present disclosure;
FIG. 6 is a cross-sectional view schematically illustrating an example of an insulation sheet and a pin-shaped flame retardant sheet including an extension portion of a battery module according to an embodiment of the present disclosure;
FIG. 7 is a partial enlarged view of a battery module including a pin-shaped flame retardant sheet including an extension portion according to an embodiment of the present disclosure, illustrating area A of FIG. 1;
FIG. 8 is a perspective view schematically illustrating another example of an insulation sheet and a pin-shaped flame retardant sheet including an extension portion of a battery module according to an embodiment of the present disclosure;
FIG. 9 is a cross-sectional views schematically illustrating another example of an insulation sheet and a pin-shaped flame retardant sheet including an extension portion of a battery module according to an embodiment of the present disclosure;
FIG. 10 is a partial enlarged view of a battery module according to another embodiment including a pin-shaped flame retardant sheet including an extension portion, corresponding to the area A of FIG. 1;
FIG. 11 is a perspective view schematically illustrating an example of an insulation sheet and a pin-shaped flame retardant sheet including an extension portion of a battery module according to an embodiment of the present disclosure, and including a first sheet and a second sheet;
FIG. 12 is a cross-sectional view schematically illustrating an example of an insulation sheet and a pin-shaped flame retardant sheet including an extension portion of a battery module according to an embodiment of the present disclosure, and including a first sheet and a second sheet;
FIG. 13 is a partial enlarged view of a battery module according to an embodiment including a pin-shaped flame retardant sheet including an extension portion, a first sheet and a second sheet, corresponding to the area A of FIG. 1;
FIG. 14 is a perspective view schematically illustrating another example of a pin-shaped flame retardant sheet including an insulation sheet and an extension portion of a battery module according to an embodiment of the present disclosure, and including a first sheet and a second sheet;
FIG. 15 is a cross-sectional view schematically illustrating another example of an insulation sheet and a pin-shaped flame retardant sheet including an extension portion of a battery module according to an embodiment of the present disclosure, and including a first sheet and a second sheet; and
FIG. 16 is a partial enlarged view of a battery module according to another embodiment including a pin-shaped flame retardant sheet including an extension portion, a first sheet and a second sheet, corresponding to the area A of FIG. 1.

### DETAILED DESCRIPTION

Hereinafter, preferred embodiments of the present disclosure will be described in detail with reference to the following drawings. Prior to this, terms or words used in this description and claims should not be interpreted as limited to their usual or dictionary meanings, and based on the principle that the inventor may appropriately define the concept of the term to explain his or her own invention in the best way, they should be interpreted as meanings and concepts that conform to the technical idea of the present disclosure. Therefore, the embodiments described in this description and the configurations illustrated in the drawings are only some of the most preferred embodiments of the present disclosure, and do not represent all of the technical idea of the present disclosure, so that it should be understood that there may be various equivalents and modified examples that may replace them at the time of filing the present application.

In some embodiments, when used in the description, "comprise, include" and/or "comprising, including" specify the presence of the mentioned features, numbers, steps, operations, elements, components and/or groups thereof, but do not preclude the presence or addition of one or more other features, numbers, steps, operations, elements, components and/or groups thereof.

In some embodiments, to aid in understanding the disclosure, the following drawings are not to scale, and the dimensions of some components may be exaggerated. In some embodiments, the same reference numbers may be assigned to the same components in different embodiments.

Although the terms "first," "second," etc. are used to describe various components, these components are not limited by these terms. These terms are used only to distinguish one component from another, and the first component may also be the second component, unless described otherwise in the context.

Throughout the description, each component may be singular or plural, unless described otherwise in the context.

The expression that a configuration is positioned "on (or below)" the "top (or bottom)" of a component may mean not only that the configuration is positioned in contact with the top or bottom surface of the component, but also that one or more other configurations may be interposed between the component and the configuration positioned on (or below) the component.

In some embodiments, when a component is described as being "coupled," "connected," or "contacted" to another component, it should be understood that the components may be directly connected or contacted to each other, but that each component may be "coupled," "connected," or "contacted" to another component through an additional component. Also, when a part is electrically coupled to another part, it includes not only that they are directly connected, but also that they are connected with another element in between.

Hereinafter, embodiments of the present disclosure will be described in detail with reference to the following drawings. When describing embodiments with reference to the drawings, identical or corresponding components are denoted by the same drawing reference numerals.

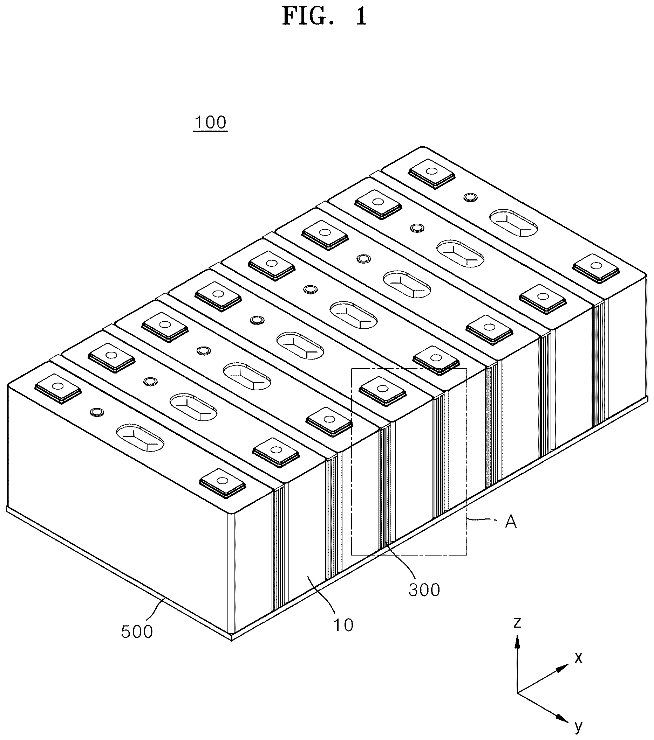

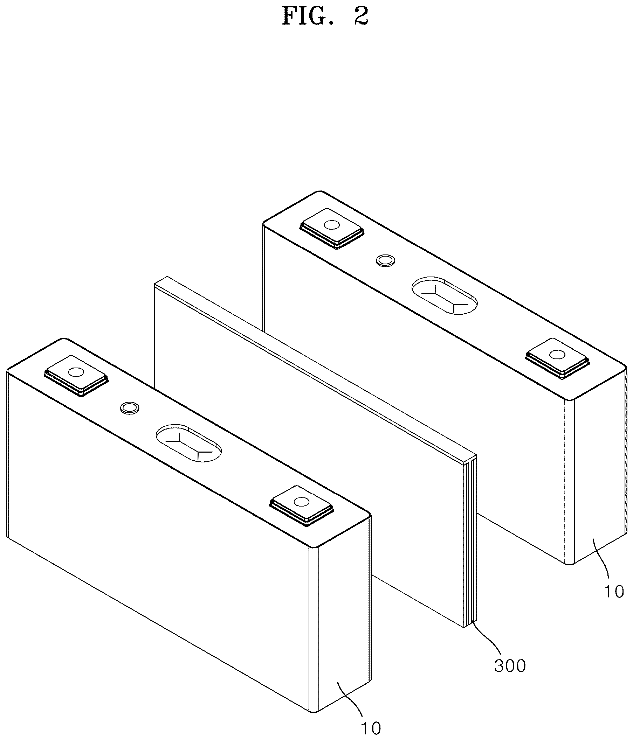

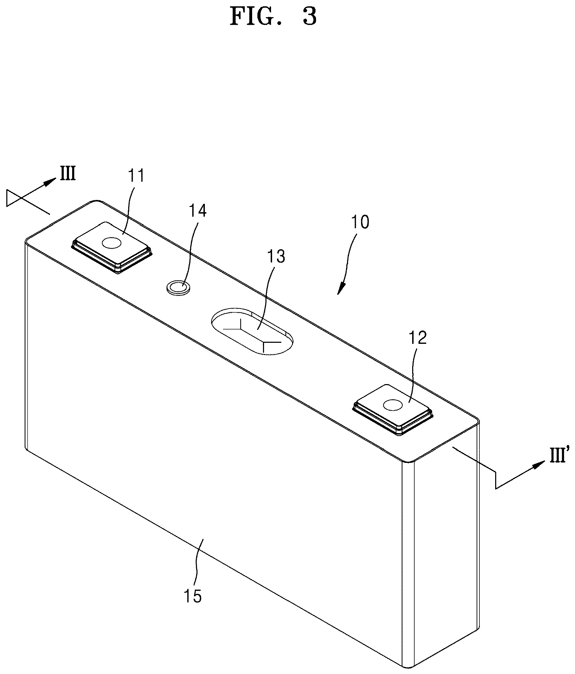

FIG. 1 is a perspective view schematically illustrating a battery module according to an embodiment of the present disclosure, and FIG. 2 is an exploded perspective view schematically illustrating a battery module according to an embodiment of the present disclosure. FIG. 3 is a perspective view schematically illustrating an example of a battery cell of the battery module of FIGS. 1 and 2, and FIG. 4 is a cross-sectional view schematically illustrating an example of a cross-section taken along line III-III' of FIG. 3.

Referring to FIGS. 1 and 2, a battery module 100 of the present disclosure according to an aspect may include: a plurality of battery cells 10; insulation sheets 300 arranged between the plurality of battery cells 10; and a cooling plate 500 positioned on one side of the plurality of battery cells 10.

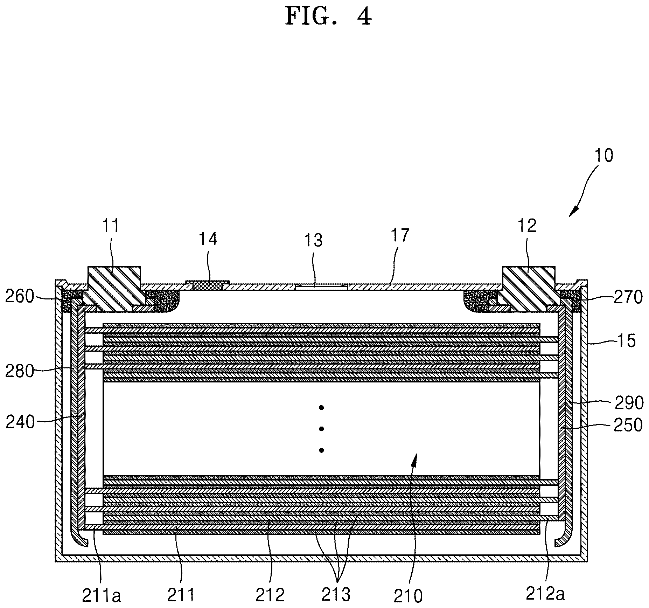

Referring to FIGS. 3 and 4, the battery cell 10 may include a battery case 15, an electrode assembly 210 housed (accommodated) within the battery case 15, and an electrolyte in the battery case 15. The electrode assembly 210 and the electrolyte react electrochemically to generate energy.

On one side of the battery cell 10, terminals 11 and 12 each electrically connected to a connection tab 20, a vent 13 as a discharge passageway for gas generated internally, and an electrolyte injection port 14 for injecting the electrolyte into the battery case 15 may be provided. The terminals 11 and 12 of the battery cell 10 may be a first terminal 11 and a second terminal 12 having different polarities. In some embodiments in which the first terminal 11 is a positive electrode terminal, the second terminal 12 may be a negative electrode terminal. In some embodiments in which the first terminal 11 is a negative electrode terminal, the second terminal 12 may be a positive electrode terminal. That is, the first terminal 11 and the second terminal 12 may have different electrical polarities and are not limited to a specific polarity.

The terminals 11 and 12 of adjacent battery cells 10 may be electrically connected in series and/or in parallel by connection tabs. In some embodiments, a first terminal 11 of one battery cell 10 may be electrically connected to a second terminal 12 of another adjacent battery cell 10 by the connection tab, and a second terminal 12 of one battery cell 10 may be electrically connected to a first terminal 11 of another adjacent battery cell 10 by another connection tab.

In some embodiments, although a connection configuration of battery cells is illustrated as an example in FIGS. 1 and 2, it is not limited to this structure, and of course, various connection structures may be adopted as needed. In some embodiments, the number and arrangement of battery cells are not limited to the structures illustrated in FIGS. 1 and 2, and may be changed as needed.

The plurality of battery cells 10 may be arranged in one direction (x) so that major surfaces of the battery cells 10, which are wide surfaces thereof, face each other, and an arranged plurality of battery cells 10 may be accommodated by a housing.

The housing may include a pair of end plates facing a wide surface of the battery cell 10, and a side plate and a bottom plate connecting the pair of end plates.

The side plate may support a side of the battery cell 10, and the bottom plate may support a bottom surface of the battery cell 10. In some embodiments, the pair of end plates, the side plate and the bottom plate may be connected by elements such as bolts.

In some embodiments, the battery cell 10 according to an embodiment of the present disclosure may include at least one electrode assembly 210 in which a first electrode plate 211 and a second electrode plate 212, each including a plurality of sheets, are alternately stacked with a separator 213 therebetween, and the case 15 in which the electrode assembly 210 is housed (accommodated).

The battery cell 10 according to the present embodiment is illustrated as a prismatic lithium ion battery cell. However, the present disclosure is not limited thereto, and the present disclosure may be applied to various types of battery cells such as lithium polymer battery cells or cylindrical battery cells.

The first electrode plate 211 and the second electrode plate 212 may include a coated portion, which is an area where an active material is applied to a current collector including a thin metal foil, and a first uncoated portion 211a and a second uncoated portion 212a, which are areas where the active material is not coated.

The electrode assembly 210 may be formed by a structure in which the first electrode plate 211 and the second electrode plate 212 including a plurality of sheets are alternately stacked with the separator 213 therebetween. However, the present disclosure is not limited thereto, and the first electrode plate 211 and the second electrode plate 212 may be wound with the separator 213 therebetween, wherein the separator 213 is an insulator.

The case 15 forms the overall appearance of the battery cell 10 and may include a conductive metal such as aluminum, an aluminum alloy, or nickel-plated steel. In some embodiments, the case 15 may provide a space in which the electrode assembly 210 is accommodated.

The battery cell 10 may include a cap plate 17 covering an opening of the case 15, and the case 15 and the cap plate 17 may have a conductive material. Here, the first terminal 11 and the second terminal 12 electrically connected to the first electrode plate 211 or the second electrode plate 212 may be provided to protrude outwardly through the cap plate 17.

In some embodiments, the outer circumferential surface of an upper pillar of the first terminal 11 and the second terminal 12 protruding outward from the cap plate 17 may be threaded and fixed to the cap plate 17 with a nut.

However, the present disclosure is not limited thereto, and the first terminal 11 and the second terminal 12 may have a rivet structure and may be riveted, or may be welded to the cap plate 17.

In some embodiments, the cap plate 17 may include a thin plate and coupled to the opening of the case 15, the electrolyte injection port 14 configured to receive a sealing plug may be formed in the cap plate 17, and the vent 13 having a notch may be installed.

The first terminal 11 and the second terminal 12 may be electrically connected to the current collector including a first current collector 240 and a second current collector 250 that are welded to the first uncoated portion 211a of the first electrode plate and the second uncoated portion 212a of the second electrode plate.

In some embodiments, the first terminal 11 and the second terminal 12 may be secured to the first current collector 240 and the second current collector 250 by welding, respectively. However, the present disclosure is not limited thereto, and the first terminal 11, the second terminal 12, the first current collector 240 and the second current collector 250 may be formed by being integrally formed.

In some embodiments, an insulating element may be installed between the electrode assembly 210 and the cap plate 17. Here, the insulating element may include first and second lower insulating elements 260 and 270, and each of the first and second lower insulating elements 260 and 270 may be installed between the electrode assembly 210 and the cap plate 17.

In some embodiments, according to the present embodiment, one end of a separating element that may be positioned facing one side of the electrode assembly 210 may be positioned between the insulating element and the first terminal 11 and the second terminal 12. Here, the separating element may include first and second separating elements 280 and 290.

Therefore, one end of the first separating element 280 and one end of the second separating element 290 that may be positioned facing one side of the electrode assembly 210 may be positioned between the first and second lower insulating elements 260 and 270 and the first terminal 11 and the second terminal 12.

Finally, the first terminal 11 and the second terminal 12 welded to the first current collector 240 and the second current collector 250 may be coupled to the first and second lower insulating elements 260 and 270 and one end of the first separating element 280 and one end of the second separating element 290.

Each insulation sheet is positioned between the plurality of battery cells 10 and is configured to prevent (or at least mitigate) heat propagation and flame spread between the plurality of battery cells 10.

The battery module 100 according to an embodiment of the present disclosure includes insulation sheets 300, 300', 400, and 400' positioned between the plurality of battery cells 10, and each of the insulation sheets 300, 300', 400, and 400' may include a pin-shaped (e.g., T-shaped) flame retardant sheet 322, 322', 422, and 422', respectively, including center portions 322a, 322a', 422a and 422a', respectively, positioned at the center of the insulation sheets 300, 300', 400 and 400', respectively, and extension portions 322b, 322b', 422b and 422b', respectively, extending in a direction intersecting with a height direction of the center portions 322a, 322a', 422a and 422a', respectively, from the center portions 322a, 322a', 422a and 422a', respectively, a pair of first thermal insulation sheets 324, 324', 424 and 424', respectively, positioned on opposite sides (left and right sides in the figures) of the center portions 322a, 322a', 422a and 422a' of the flame retardant sheets 322, 322', 422 and 422', and a pair of second thermal insulation sheets 326, 326', 426 and 426', respectively, positioned on an outer side (left and right sides in the figures) of each of the pair of first thermal insulation sheets 324, 324', 424 and 424', respectively(see FIGS. 1 and 5 to 15). In one or more embodiments, the center portions 322a, 322a', 422a and 422a' may extend substantially perpendicular to the extension portions 322b, 322b', 422b and 422b', respectively.

According to an embodiment, the first thermal insulation sheets 324, 324', 424, 424' may include aerogel, and the second thermal insulation sheet 326, 326', 426, 426' may include MICA. Aerogel is a transparent or translucent material with a nanoporous structure and is used as a thermal insulation material due to very low density and low thermal conductivity, and MICA has high heat resistance, thereby effectively blocking heat even in high-temperature environments and being used as a thermal insulation material.

The insulation sheets 300, 300', 400 and 400' of the battery module 100 according to an embodiment of the present disclosure are configured to have a multilayer structure having the second thermal insulation sheet 326, 326', 426, 426' including MICA, the first thermal insulation sheet 324, 324', 424, 424' including aerogel, and the pin-shaped flame retardant sheet 322, 322', 422, and 422', thereby effectively delaying and preventing (or at least mitigating) heat propagation between battery cells 10 such that thermal runaway may also be delayed or prevented, and the stability of the battery module 100 may be improved.

Furthermore, the insulation sheets 300, 300', 400 and 400' of the battery module 100 according to an embodiment of the present disclosure may stably support or fix the thermal insulation sheets constituting the insulation sheets 300, 300', 400 and 400' by including the pin-shaped flame retardant sheets 322, 322', 422 and 422', thereby improving the structural stability of the insulation sheets 300, 300', 400, and 400' such that the structural stability inside the battery module 100 may also be improved.

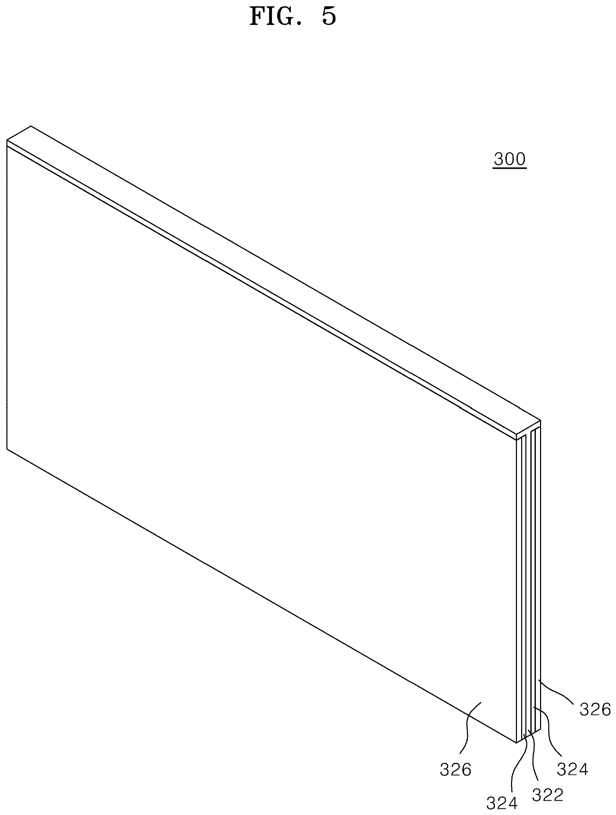

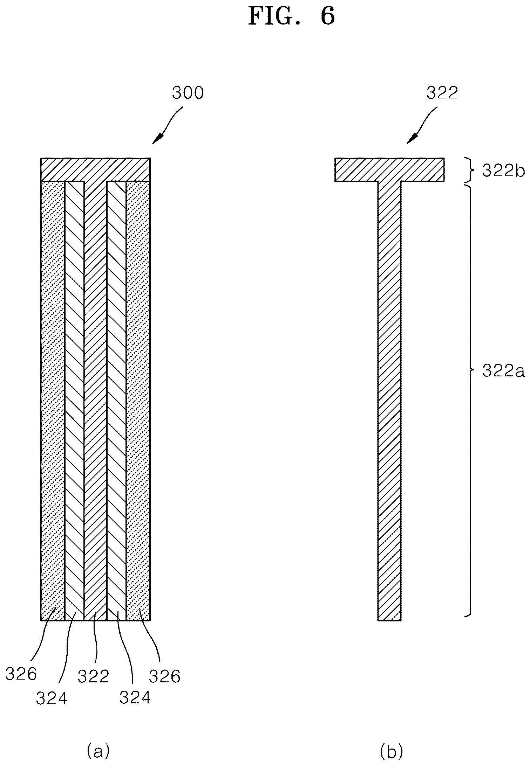

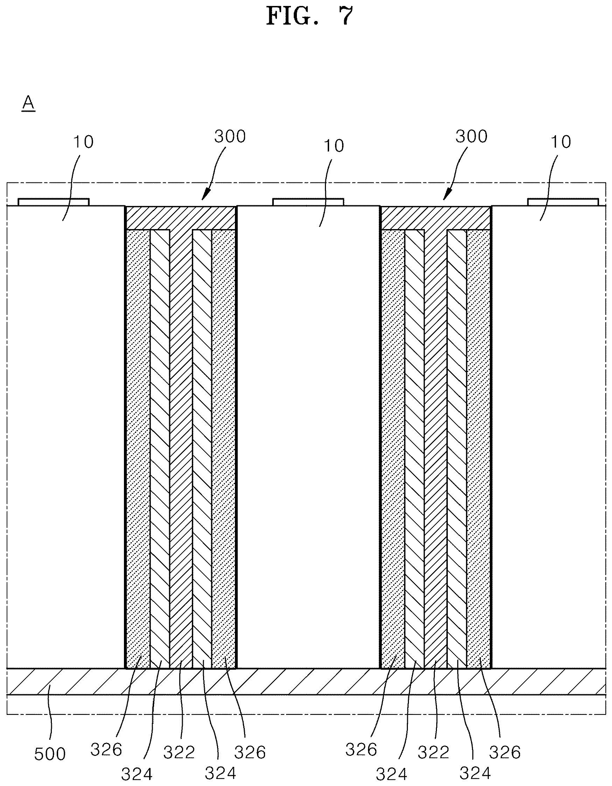

FIG. 5 is a perspective view schematically illustrating an example of an insulation sheet and a pin-shaped flame retardant sheet including an extension portion of a battery module according to an embodiment of the present disclosure, FIG. 6 is a cross-sectional view schematically illustrating an example of an insulation sheet and a pin-shaped flame retardant sheet including an extension portion of a battery module according to an embodiment of the present disclosure, and FIG. 7 is a partial enlarged view of a battery module including a pin-shaped flame retardant sheet including an extension portion according to an embodiment of the present disclosure, illustrating area A of FIG. 1.

Referring to FIGS. 5 to 7, the battery module 100 according to an embodiment of the present disclosure may include the pin-shaped flame retardant sheet 322 including the center portion 322a positioned at the center (or substantially the center) of the insulation sheet 300 and the extension portion 322b extending from one end (e.g., the upper end) of the center portion 322a in a direction intersecting with a height direction of the center portion 322a (e.g., substantially perpendicular to the center portion 322a). In other words, the extension portion 322b may extend substantially in a width direction of the center portion. A pair of the first thermal insulation sheets 324 is respectively positioned on opposite sides (e.g., left and right sides) of the center portion 322a of the flame retardant sheet 322, and a pair of second thermal insulation sheets 326 respectively positioned on an outer side (e.g., left and right sides) of each of the pair of first thermal insulation sheets 324.

In an embodiment, the pin-shaped flame-retardant sheet 322 may include the center portion 322a positioned at the center (or substantially the center) of the insulation sheet 300 and the extension portion 322b extending in a direction intersecting with a height direction of the center portion 322a (e.g., substantially perpendicular or extending substantially in a width direction of the center portion 322a) from the top of the center portion 322a. In some embodiments, the extension portion 322b is the top most portion of the insulation sheets 300. In some embodiments, the extension portion 322b is substantially flush with a top end of the adjacent battery cells 10.

In some embodiments, according to an embodiment, the flame-retardant sheet 322 includes the extension portion 322b, and the extension portion 322b may cover (or substantially cover) the tops of the pair of first thermal insulation sheets 324 and second thermal insulation sheets 326. In some embodiments, the extension portion 322b is flush with an outer side of second thermal insulation sheets 326 along a height of the second thermal insulation sheets 326.

Heat transferred between battery cells 10 moves from the higher temperature to the lower temperature regions. Accordingly, heat moves to the cooling plate or a vent flow path, and when the heat is not sufficiently dissipated, heat propagation may occur between adjacent battery cells, resulting in thermal runaway.

According to an embodiment of the present disclosure, the battery module 100 has the flame retardant sheet 322 including a pin-shaped flame retardant material of the insulation sheet 300 positioned between the battery cells 10 such that even if excessive heat is generated in the battery cells 10 inside the battery module 100, the pin-shaped flame retardant sheet 322 blocks (or at least mitigates the transfer of) the heat, thereby preventing the heat from being transmitted to surrounding battery cells 10. Furthermore, heat blocked by the extension portion 322b of the flame-retardant sheet 322 may be directed to the cooling plate 500 positioned on one side (e.g., the bottom side) of the battery cell 10 and the insulation sheet 300, and then be dissipated.

In some embodiments, the extension portion 322b, 322b', 422b, 422b' of the flame-retardant sheet 322, 322', 422 and 422' may be positioned on an opposite side to the cooling plate 500 (e.g., the extension portion 322b, 322b', 422b, 422b' may be on the upper end of the center portions 322a, 322a', 422a and 422a' and the cooling plate 500 may be on the lower end of the center portions 322a, 322a', 422a and 422a'). Accordingly, the heat that is blocked from moving to the adjacent battery cell 10 due to the extension portion 322b, 322b', 422b and 422b' of the flame-retardant sheet 322 may move to the cooling plate 500 positioned on the opposite side, and then the heat may be dissipated.

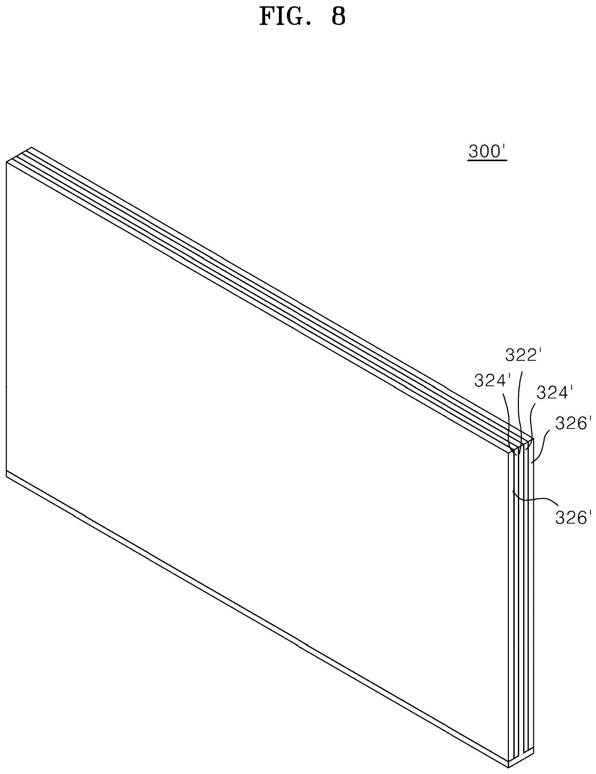

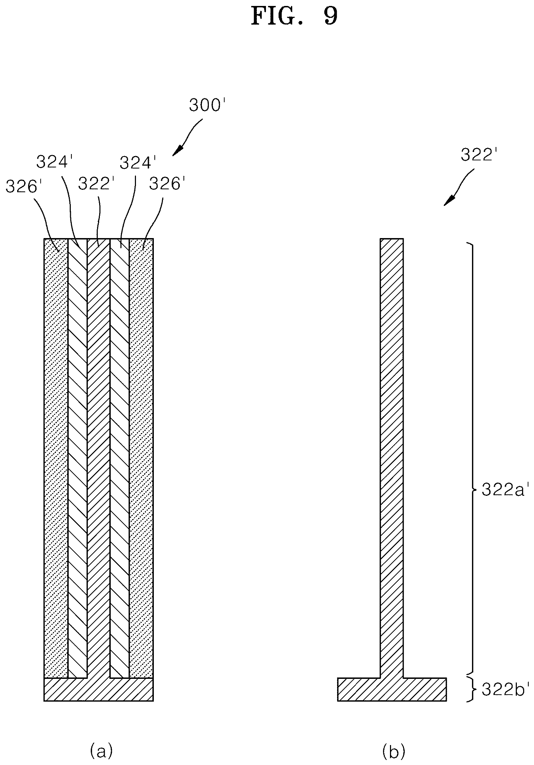

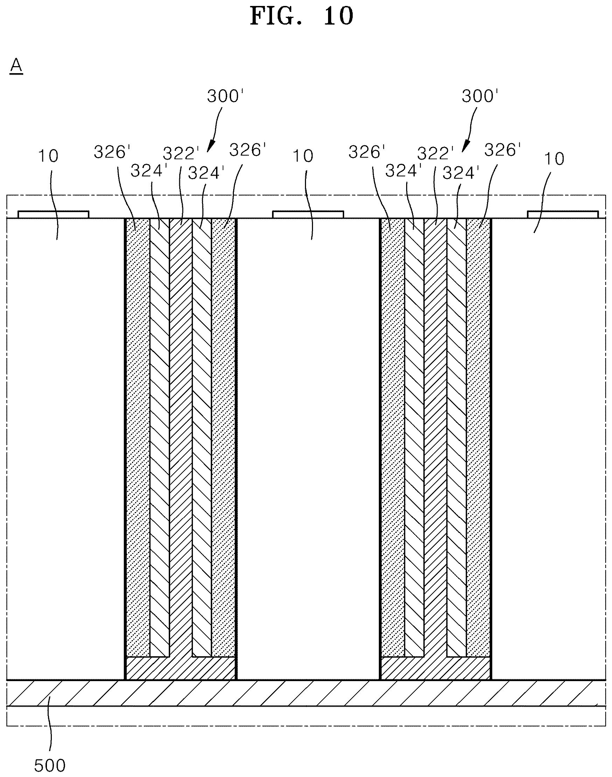

FIG. 8 is a perspective view schematically illustrating another example of an insulation sheet and a pin-shaped flame retardant sheet including an extension portion of a battery module according to an embodiment of the present disclosure, FIG. 9 is a cross-sectional view schematically illustrating another example of an insulation sheet and a pin-shaped flame retardant sheet including an extension portion of a battery module according to an embodiment of the present disclosure, and FIG. 10 is a partial enlarged view of a battery module according to another embodiment including a pin-shaped flame retardant sheet including an extension portion, corresponding to the area A of FIG. 1.

Referring to FIGS. 8 to 10, the battery module 100 according to an embodiment of the present disclosure may include the pin-shaped flame retardant sheet 322' including the center portion 322a' positioned at the center (or substantially the center) of the insulation sheet 300 and the extension portion 322b' extending in a direction intersecting a height direction of the center portion 322a' from the center portion 322a' (e.g., the extension portion 322b' may extend substantially perpendicular to the center portion 322a' from a lower end of the center portion 322a') , a pair of the first thermal insulation sheets 324' respectively positioned on opposite sides (e.g., left and right sides) of the center portion 322a' of the flame retardant sheet 322', and a pair of second thermal insulation sheets 326' respectively positioned on an outer side of each (e.g., left and right sides) of the pair of first thermal insulation sheets 324'.

In an embodiment, the pin-shaped flame retardant sheet 322' may include the center portion 322a' positioned at the center (or substantially the center) of the insulation sheet 300' and the extension portion 322b' extending in a direction intersecting with a height direction (e.g., substantially perpendicular to the height direction or extending substantially in a width direction of the center portion 322a') of the center portion 322a' from the bottom of the center portion 322a'. In some embodiments, the extension portion 322b' is the bottom most portion of the insulation sheets 300'. In some embodiments, the extension portion 322b' is substantially flush with a top end of the adjacent battery cells 10.

In some embodiments, according to an embodiment, the flame-retardant sheet includes the extension portion 322b', and the extension portion 322b' may cover (or substantially cover) the bottom of the pair of first thermal insulation sheets 324' and second thermal insulation sheets 326'. In some embodiments, the extension portion 322b' is flush with an outer side of second thermal insulation sheets 326' along the height of the second thermal insulation sheets 326'.

Furthermore, heat blocked (or at least mitigated) by the extension portion 322b' of the flame retardant sheet 322' may move to the cooling plate 500 positioned on one side (e.g., the upper side or the lower side) of the battery cell 10 and the insulation sheet 300', and then be dissipated.

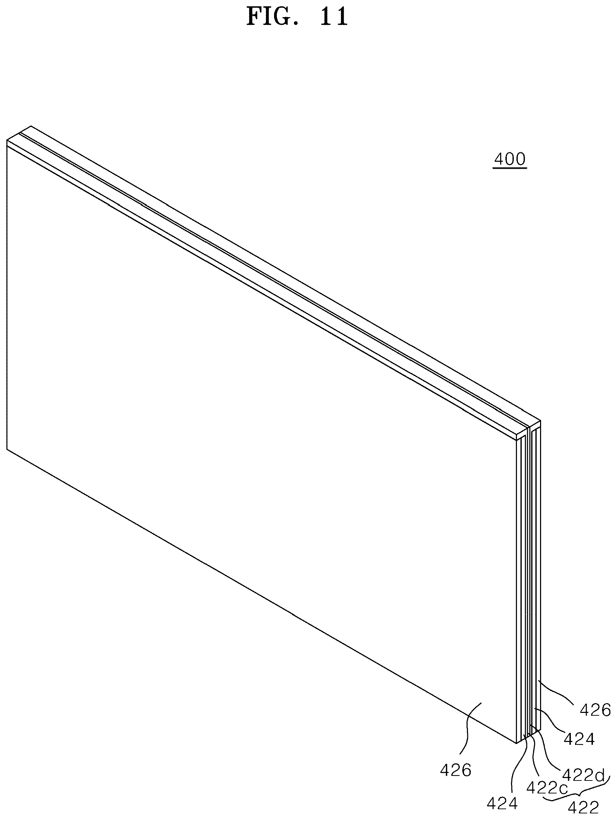

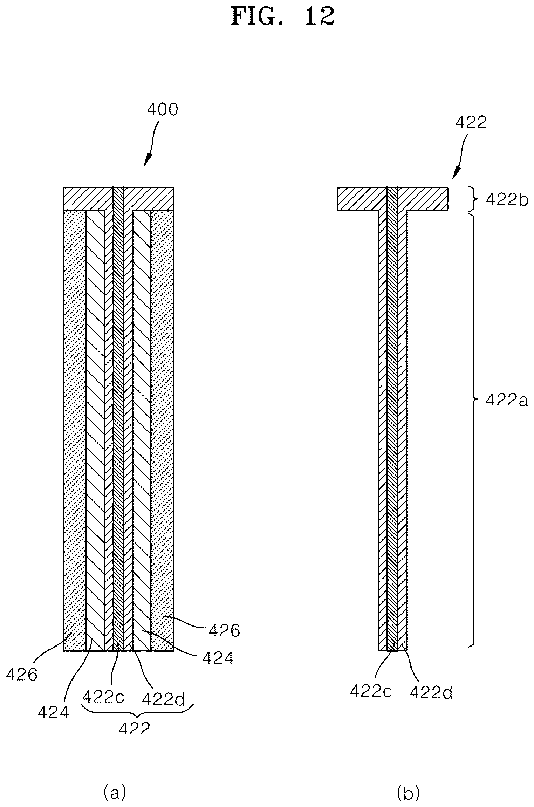

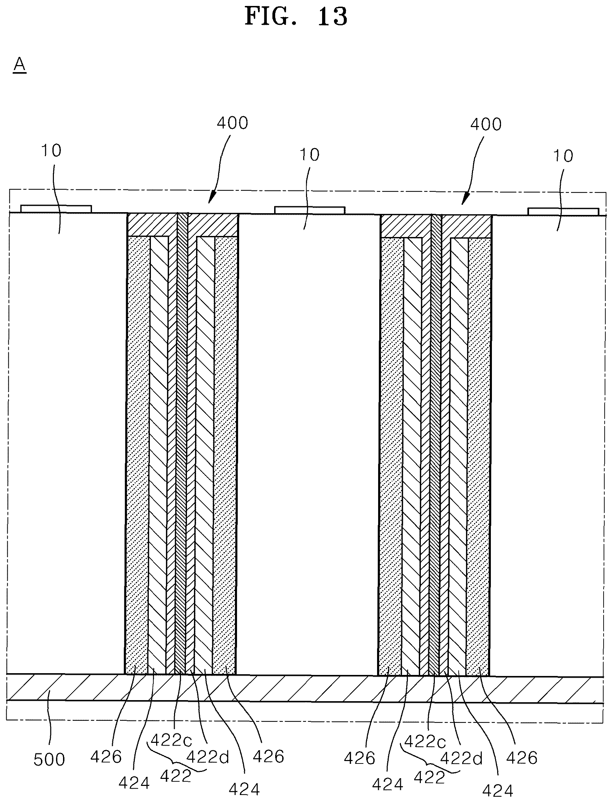

FIG. 11 is a perspective view schematically illustrating an example of an insulation sheet and a pin-shaped flame retardant sheet including an extension portion of a battery module according to an embodiment of the present disclosure, and including a first sheet and a second sheet, FIG. 12 is a cross-sectional view schematically illustrating an example of an insulation sheet and a pin-shaped flame retardant sheet including an extension portion of a battery module according to an embodiment of the present disclosure, and including a first sheet and a second sheet, and FIG. 13 is a partial enlarged view of a battery module according to an embodiment including a pin-shaped flame retardant sheet including an extension portion, a first sheet, and a second sheet, corresponding to the area A of FIG.1.

The flame-retardant sheet 322, 322', 422 and 422' of the battery module 100 according to an embodiment of the present disclosure may include at least one of a flame retardant material and a heat dissipation material.

Referring to FIGS. 11 to 13, the battery module 100 according to an embodiment of the present disclosure may include the pin-shaped flame retardant sheet 422 including the center portion 422a positioned at the center (or substantially the center) of the insulation sheet 400 and the extension portion 422b extending in a direction intersecting with a height direction (e.g., substantially perpendicular to the height direction) of the center portion 422a from the center portion 422a, a pair of the first thermal insulation sheets 424 respectively positioned on opposite sides (e.g., left and right sides) of the center portion 422a of the flame retardant sheet 422, and a pair of second thermal insulation sheets 426 respectively positioned on an outer side (e.g., left and right sides) of each of the pair of first thermal insulation sheets 424.

In an embodiment, the pin-shaped flame-retardant sheet 422 may include the center portion 422a positioned at the center (or substantially the center) of the insulation sheet 400 and the extension portion 422b extending in a direction intersecting with a height direction (e.g., substantially perpendicular to the height direction or extending substantially in a width direction of the center portion 422a) of the center portion 422a from the top of the center portion 422a. In some embodiments, the extension portion 422b is the bottom most portion of the insulation sheets 400. In some embodiments, the extension portion 422b is substantially flush with a top end of the adjacent battery cells 10.

In some embodiments, the flame-retardant sheet 422 includes the extension portion 422b, and the extension portion 422b may cover (or substantially cover) the top of the pair of first thermal insulation sheets 424 and second thermal insulation sheets 426. In some embodiments, the extension portion 422b is flush with an outer side of second thermal insulation sheets 426 along the height of the second thermal insulation sheets 426.

Furthermore, the flame-retardant sheet 422 of the battery module 100 according to an embodiment of the present disclosure includes a first sheet 422c positioned in the center (or substantially the center) and including a flame-retardant material, and a second sheet 422d positioned on opposite sides (e.g., left and right sides) of the first sheet 422c and including a heat dissipation material. The second sheet 422d may include the extension portion 422b of the flame-retardant sheet 422. In some embodiments, the extension portion 422b comprised by the second sheet 422d extends further in the height direction than the center portion 422a of the second sheet 422d extends in a width direction. In some embodiments, the extension portion 422b comprised by the second sheet 422d extends further in the height direction than the first sheet 422c extends in a width direction. In other words, a height of the extension portion 422b may be larger than a width of the center portion 422a of the second sheet 422d and/or of the first sheet 422c. In some embodiments, a height of the extension portion 422b is substantially the same as a width of the first sheet 422c and two widths of the center portion 422a of the second sheet 422d. In some embodiments, the center portion 422a of the second sheet 422d extends in the width direction substantially the same as the first sheet 422c. In other words, a width of the center portion 422a of the second sheet 422d may be substantially the same as a width of the first sheet 422c.

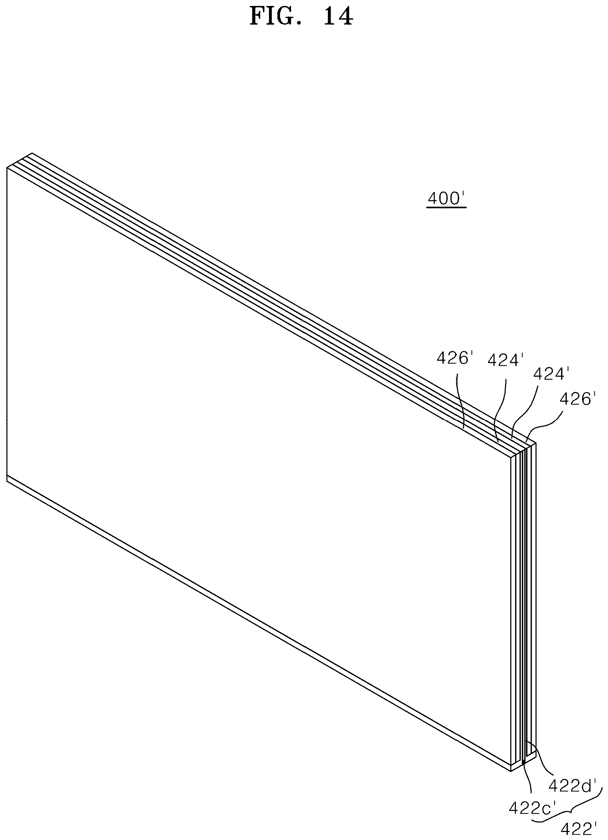

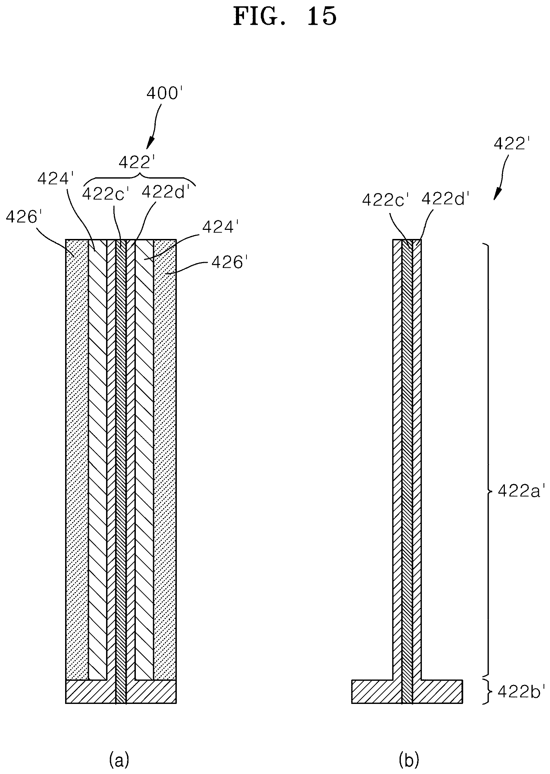

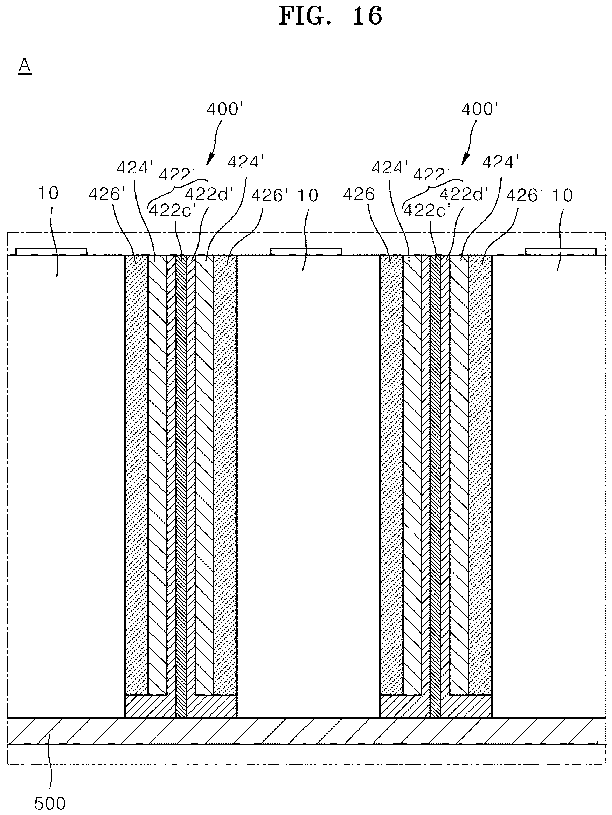

FIG. 14 is a perspective view schematically illustrating an example of a pin-shaped flame-retardant sheet including an insulation sheet and an extension portion of a battery module according to an embodiment of the present disclosure, and including a first sheet and a second sheet. FIG. 15 is a cross-sectional view schematically illustrating an example of an insulation sheet and a pin-shaped flame-retardant sheet including an extension portion of a battery module according to an embodiment of the present disclosure, and including a first sheet and a second sheet. FIG. 16 is a partial enlarged view of a battery module according to an embodiment including a pin-shaped flame retardant sheet including an extension portion, a first sheet, and a second sheet, corresponding to the area A of FIG. 1.

Referring to FIGS. 14 to 16, the battery module 100 according to an embodiment of the present disclosure may include the pin-shaped flame retardant sheet 422' including the center portion 422a' positioned at the center (or substantially the center) of the insulation sheet 400' and the extension portion 422b' extending in a direction intersecting with a height direction (e.g., substantially perpendicular to the height direction) of the center portion 422a' from the center portion 422a', a pair of the first thermal insulation sheets 424' respectively positioned on opposite sides (e.g., left and right sides) of the center portion 422a' of the flame retardant sheet 422', and a pair of second thermal insulation sheets 426' respectively positioned on an outer side of each (e.g., left and right sides) of the pair of first thermal insulation sheets 424'.

In an embodiment, the pin-shaped flame retardant sheet 422' may include the center portion 422a' positioned at the center (or substantially the center) of the insulation sheet 400' and the extension portion 422b' extending in a direction intersecting with a height direction (e.g., substantially perpendicular to the height direction or extending substantially in a width direction of the center portion 422a') of the center portion 422a' from the bottom of the center portion 422a'. In some embodiments, the extension portion 422b' is the bottom most portion of the insulation sheets 400'. In some embodiments, the extension portion 422b' is substantially flush with a top end of the adjacent battery cells 10.

In some embodiments, according to an embodiment, the flame-retardant sheet 422' includes the extension portion 422b', and the extension portion 422b' may cover (or substantially cover) the bottom of the pair of first thermal insulation sheets 424' and second thermal insulation sheets 426' In some embodiments, the extension portion 422b' is flush with an outer side of second thermal insulation sheets 426' along the height of the second thermal insulation sheets 426'.

Furthermore, the flame retardant sheet 422' of the battery module 100 according to an embodiment of the present disclosure includes a first sheet 422c' positioned in the center (or substantially the center) and including a flame-retardant material, and a second sheet 422d' positioned on opposite sides (e.g., left and right sides) of the first sheet 422c' and including a heat dissipation material, and the second sheet 422d' may include the extension portion 422b' of the flame retardant sheet 422'. In some embodiments, the extension portion 422b' comprised by the second sheet 422d' extends further in the height direction than the center portion 422a' of the second sheet 422d' extends in a width direction. In some embodiments, the extension portion 422b' comprised by the second sheet 422d' extends further in the height direction than the first sheet 422c' extends in a width direction. In other words, a height of the extension portion 422b' may be larger than a width of the center portion 422a' of the second sheet 422d' and/or of the first sheet 422c'. In some embodiments, a height of the extension portion 422b' is substantially the same as a width of the first sheet 422c' and two widths of the center portion 422a' of the second sheet 422d'. In some embodiments, the center portion 422a' of the second sheet 422d' extends in the width direction substantially the same as the first sheet 422c'. In other words, a width of the center portion 422a' of the second sheet 422d' may be substantially the same as a width of the first sheet 422c'.

When heat is transferred between battery cells 10, the heat must move quickly through the cooling plate 500 such that the heat may be dissipated. The flame retardant sheet 422 and 422' allows heat to be transferred and dissipated quickly through the second sheets 422d and 422d' including a heat dissipation material with high thermal conductivity and high melting point. However, when the heat is not sufficiently dissipated through the second sheets 422d and 422d', the first sheets 422c and 422c' may block the heat, thereby delaying or preventing heat propagation to adjacent battery cells 10 and also preventing flames.

In some embodiments, the flame retardant material that may be included in the flame retardant sheet 322, 322', 422, and 422' may be a material having low thermal conductivity and high dielectric strength characteristics. Although not limited thereto, the flame retardant material of the battery module 100 according to an embodiment of the present disclosure may include at least one of chlorine, bromine and/or antimony. The flame retardant material may prevent (or at least mitigate) the heat or flame from spreading to another adjacent battery cell 10 by lowering the activity of the combustion reaction and reducing the dissipation of the heat because hydrogen bromide and antimony bromide are generated during the combustion process when heat or flame is generated in the battery cell 10.

According to an embodiment of the present disclosure, the heat dissipation material that may be included in the flame retardant sheet 322, 322', 422, and 422' may include at least one of a metal material, a carbon-based material, a boron nitride nanotube, and/or a silicon composite material.

The heat dissipation material may include a metal material having high thermal conductivity and high temperature resistance that may increase a heat conduction path, and may include a carbon-based material having high thermal conductivity. Although the present disclosure is not limited thereto, the heat dissipation material of the battery module 100 according to an embodiment of the present disclosure may include silver or copper, and may include diamond, graphite, graphene and/or carbon nanotubes (CNT).

In some embodiments, the heat dissipation material may include a material capable of both heat dissipation and insulation, thereby serving as insulation between battery cells 10. Although the present disclosure is not limited thereto, the heat dissipation material of the battery module 100 according to an embodiment of the present disclosure may include a boron nitride nanotube (BNNT) and a silicon composite material.

In one or more embodiments, the heat dissipation material may include a material having higher thermal conductivity and lower thermal expansion coefficient compared to other materials. Although the present disclosure is not limited thereto, the heat dissipation material of the battery module 100 according to an embodiment of the present disclosure may include a hybrid heat dissipation material in which a metal and a carbon-based material are combined, and the hybrid heat dissipation material may be a material in which copper and diamond are combined.

According to an embodiment, the battery module of the present disclosure may delay or prevent (or at least mitigate) heat propagation and thermal runaway between battery cells.

According to an embodiment, the battery stability of the present disclosure may be improved.

However, the effects which may be obtained through the present disclosure are not limited to the above described effects, and other technical effects which are not mentioned may be clearly understood by a person skilled in the art from the specification described below.

Although the present disclosure has been described with reference to limited embodiments and drawings, it is not limited thereto, and it will be apparent to a person skilled in the art that various changes and alterations are possible without departing from the spirit of the invention and the scope of equivalents described in the following claims.

## Claims

1. A battery module (100) comprising:
a plurality of battery cells (10);
a plurality of insulation sheets (300, 300', 400, 400'), each insulation sheet (300, 300', 400, 400') of the plurality of insulation sheets (300, 300', 400, 400') being positioned between a pair of adjacent battery cells (10) of the plurality of battery cells (10); and
a cooling plate (500) positioned on one side of each of the plurality of battery cells (10);
wherein each insulation sheet (300, 300', 400, 400') of the plurality of insulation sheets (300, 300', 400, 400') comprises:
a pin-shaped flame-retardant sheet (322, 322', 422, 422') including a center portion (322a, 322a', 422a, 422a') positioned at substantially a center of each of the insulation sheets (300, 300', 400, 400') and an extension portion (322b, 322b', 422b, 422b') extending from the center portion (322a, 322a', 422a, 422a') in a direction intersecting with a height direction of the center portion (322a, 322a', 422a, 422a');
a pair of first thermal insulation sheets (324, 324', 424, 424') respectively positioned on opposite sides of the center portion (322a, 322a', 422a, 422a') of the pin-shaped flame-retardant sheet (322, 322', 422, 422'); and
a pair of second thermal insulation sheets (326, 326', 426, 426') respectively positioned on outer sides of the pair of first thermal insulation sheets (324, 324', 424, 424').

2. The battery module (100) of claim 1, wherein the pair of first thermal insulation sheets (324, 324', 424, 424') includes aerogel.

3. The battery module (100) of claim 1 or 2, wherein the pair of second thermal insulation sheets (326, 326', 426, 426') includes MICA.

4. The battery module (100) of any one of claims 1 to 3, wherein the extension portion (322b, 322b', 422b, 422b') substantially covers tops of the pair of first thermal insulation sheets (324, 324', 424, 424') and the pair of second thermal insulation sheets (326, 326', 426, 426').

5. The battery module (100) of any one of claims 1 to 3, wherein the extension portion (322b, 322b', 422b, 422b') substantially covers bottoms of the pair of first thermal insulation sheets (324, 324', 424, 424') and the pair of second thermal insulation sheets (326, 326', 426, 426').

6. The battery module (100) of any one of claims 1 to 5, wherein the pin-shaped flame-retardant sheet (322, 322', 422, 422') includes at least one of a flame-retardant material or a heat dissipation material.

7. The battery module (100) of claim 6, wherein the pin-shaped flame-retardant sheet (322, 322', 422, 422') includes:
a first sheet (422c, 422c') positioned in substantially the center and including the flame-retardant material; and
a second sheet (422d, 422d') positioned on opposite sides of the first sheet (422c, 422c') and including the heat dissipation material.

8. The battery module (100) of claim 7, wherein the second sheet (422d, 422d') includes the extension portion (322b, 322b', 422b, 422b') of the pin-shaped flame-retardant sheet (322, 322', 422, 422').

9. The battery module of claim 8, wherein the extension portion (422b, 422b') extends further in a height direction than the center portion (, 422a') of the second sheet (422d, 422d') extends in a width direction.

10. The battery module (100) of any one of claims 6 to 9, wherein the flame-retardant material includes at least one of chlorine, bromine, or antimony.

11. The battery module of any one of claims 6 to 10, wherein the heat dissipation material includes at least one of a metal material, a carbon-based material, a boron nitride nanotube, or a silicon composite material.

12. The battery module (100) of any one of claims 1 to 11, wherein the extension portion (322b, 322b', 422b, 422b') is positioned on a side of the pin-shaped flame-retardant sheet (322, 322', 422, 422') opposite to the cooling plate (500).
